# EUROPEAN PATENT APPLICATION

(11) **EP 2 006 082 A2**
(43) Date of publication of application: **24.12.2008**
(21) Application number: 08380081.3
(22) Date of filing: 12.03.2008
(51) Int. Cl.: B32B 7/02, B32B 27/00, B65D 30/06

(54) **Plastic strip and packaging made from said strip**

(30) Priority: 20.06.2007 ES 200701697
(71) Applicant: Giro GH S.A., 08911 Badalona (ES)
(72) Inventor: Giro Amigo, Ezequiel, 08911 Badalona (ES)
(74) Representative: SUGRANES - VERDONCES - FERREGÜELA

(57) **Abstract**

Strip (1) of compostable plastic material of the type that comprises sealing areas (2) that are designed to be heat-sealed to a compostable mesh (3) or section thereof, which comprises an inner sheet (4) of compostable plastic material with a melting temperature that is appreciably the same as the melting temperature of the mesh or section of mesh. The inner sheet (4) is thermally protected by an outer layer (5,6).

Another object of the invention is packaging (7) of compostable material that is adapted to cover food products (8), which comprises a mesh (3) of compostable material that is adapted to come into contact with the food products (8); and at least one strip (1) as described above. The packaging (7) takes the form of a single sheet (14) or a bag (10) with a flexible tubular mesh body (9) of compostable material that can be heat-sealed to strips (1).

## Description

### Technical field of the invention

The present invention relates to a strip of compostable plastic material of the type that comprises sealing areas that are designed to be heat-sealed to a mesh or section of mesh. It also relates to packaging of compostable material that is adapted to cover food products and in particular fruit and vegetable products, which comprises a mesh of compostable material and the strip of compostable plastic material.

The invention also discloses packaging in the form of a bag.

### Background of the invention

As a result of a growing awareness and need to protect the environment, an increasing number of packages and means of packaging made from biodegradable materials, i.e. that degrade by biological action, are appearing on the market.

Thus, it is common to use bags and other types of packaging, e.g. paper or boxes, with a low environmental impact, which are made from modified starch, polylactones, polyhydroxybutyrate and other materials that can be used alone or with traditional plastic polymers, e.g. polyethylene, polyterephthalene or polystyrene.

In packaging processes of fruit and vegetable products, e.g. potatoes, onions, oranges, pears, etc., these foods are placed inside bags made from a tubular body that is closed at its ends. Said tubular body is usually made from sheets of a heat-sealable plastic material. In a first step, the lower end of the tubular body is sealed or closed by applying heat to the plastic material. With this operation, the plastic material that constitutes the tubular body is melted, creating points where opposite areas are joined together. The tubular body is then filled with the product to be packaged and finally the upper end is also sealed or closed. To make it possible to see the product and to ensure its correct ventilation in the case of fruit and vegetable products, the tubular body of the bag generally takes the form of a mesh made from strips of plastic material.

This type of bag usually carries labels or strips of the same plastic material with information relating to the identification of the product, drawings, distributors or brands. These labels or strips can take the form of outer plastic sheets that are also heat-sealed to the upper and/or lower ends of the tubular body; or they can hang from one end of the bag.

With the intention of providing bags with a low environmental impact, patent EP 0765210 B1 discloses a procedure for manufacturing "Raschel" type woven or knitted strips from a material in film form, with which it is possible to manufacture very strong biodegradable sacks or bags that are made from modified starch and polycaprolactone. In this procedure, the strips are first moistened, and then cut and stretched at a high temperature. Before proceeding to cut them into thin strips of the desired length, the strips are cooled. With a procedure such as that disclosed in patent document EP 0765210 B1 it is possible to manufacture sacks or bags, as has been mentioned above, preferably bags made from a mesh or tubular body designed to contain fruit and vegetable products.

However, it is difficult to apply the usual packaging or filling procedures of this type of bags or sacks, i.e. bags with a flexible tubular mesh body, to the biodegradable tubular material that is produced according to patent document EP 0765210 B1, as the temperature at which the upper and lower ends of the tubular body must be sealed to ensure the closure of the bag and its content is too high, causing the tubular body to break and soil the heat-sealing equipment.

The problem is worse still when, as has been mentioned above, in addition to the tubular body containing the products in question, the bag must have informative or commercial strips or labels, as they must also be adhered, generally and preferably by heat sealing.

In order to provide solutions to the aforementioned problems, the present invention proposes a bag of compostable material wherein the sealing areas that form the means of closure thereof are reinforced to prevent the materials that it is made of from disintegrating and eventually breaking during the closure step.

### Explanation of the invention

The object of the present invention is a strip of compostable plastic material of the type that comprises sealing areas that are designed to be heat-sealed to a mesh or section of mesh, which is a novel and surprising solution to the problems described above.

Essentially, the strip of compostable plastic material that is the object of the invention is characterised in that it comprises an inner sheet of compostable plastic material with a melting temperature that is appreciably the same as the melting temperature of the mesh or section of mesh; and in that it is provided, at least in the material heat-sealing areas, with a thermally-protective outer layer that, in turn, comprises at least one compound whose melting temperature is higher than the melting temperature of the inner sheet of compostable plastic material.

The fact that the melting temperatures are appreciably the same means that the melting temperatures of the mesh or section of mesh and the inner sheet of compostable plastic material do not have to be the same, but there can be a difference of up to 20°C between the melting temperature of said mesh and inner sheet of compostable material.

In the context of the present invention, compostable material refers to any material that can be subjected to composting, i.e. to a procedure to produce compost by aerobic decomposition or anaerobic digestion of biodegradable organic matter, biodegradable meaning matter (generally organic matter) that can be degraded by live organisms. Compost is humus artificially produced by the heat-assisted biochemical decomposition of organic waste.

Likewise, thermally-protective layer means any type of coating or sheet that acts as a thermal barrier, allowing the necessary heat to pass in order to melt and join the materials that constitute the mesh and the inner sheet of the strip that is designed to be sealed to said mesh, whilst preventing excess heat from passing and causing the degradation of said inner sheet and/or the mesh to which the strip of compostable plastic material must be adhered.

Preferably, at least one of the two sides of the inner sheet of plastic material can be printed on.

According to another characteristic of the invention, the strip of compostable plastic material comprises an inner sheet of compostable plastic material that, in turn, comprises at least one compound selected from the group consisting of modified starch, polylactones, polyesters, aliphatic polyesters, copolyesters, aliphatic copolyesters, polylactic acid or its derivatives and polycaprolactones.

The strip of compostable plastic material according to the invention is also characterised in that the thermally-protective outer layer consists of an outer sheet of compostable material, which is superimposed, at least in the material heat-sealing areas, on the inner sheet of compostable plastic material.

Preferably, the outer sheet of compostable material comprises at least one compound selected from the group consisting of cellulose or one of its derivatives, modified starch, polylactones, polyesters, aliphatic polyesters, copolyesters, aliphatic copolyesters, polylactic acid or its derivatives and polycaprolactones, all of which have a melting temperature that is higher than the melting temperature of the inner sheet of compostable plastic material.

In the technical field, polylactic acid means a biodegradable polyester that does not occur naturally, which is obtained from the fermentation of sugar in a multistep procedure. In said procedure, glucose (sugar) is transformed into lactic acid, which is polymerised in blocks of two condensed lactic acids (dilactides) until the desired result is achieved. Polylactic acid (PLA) is transparent, rigid and mechanically stable. It behaves like a thermoplastic material and is used in injection moulding, in implants and in heat-mouldable sheets.

The outer sheet of the strip of plastic material preferably comprises cellulose or one of its derivatives in the form of wood pulp.

Wood pulp, which is also referred to as cellulose pulp or cellulose paste, is the most commonly used material in paper manufacturing. To obtain wood pulp the bark of the wood is first removed. The cellulose fibres that keep the wood together are then separated using two different procedures, as appropriate. The wood can be ground and then moistened; or chemical products can be added in digesters where the additional effect of heat and said chemical products dissolve the lignin, which is a compound that keeps the cellulose fibres together, this lignin then being eliminated together with the other chemical products, leaving only the whole wood fibres.

Preferably, at least one of the two sides of the outer sheet of compostable plastic material can be printed on.

According to another variant that is the object of the invention, the strip of compostable plastic material is characterised in that the thermally-protective outer layer consists of a coating that is evenly distributed over the inner sheet, at least in the material heat-sealing areas.

The coating preferably comprises at least one epoxy compound, lacquers, polyesters or acrylic compounds.

Another object of the present invention is packaging of compostable material that is adapted to cover food products and in particular fruit and vegetable products, which comprises a mesh of compostable material that is adapted to come into contact with the food products; and at least one plastic strip attached to the mesh at least by sealing areas. Said packaging is characterised in that it comprises a plastic strip as described above, i.e. a strip of compostable plastic material that comprises an inner sheet of compostable plastic material with a melting temperature that is appreciably the same as the melting temperature of the mesh or section of mesh; and which is provided, at least in the material heat-sealing areas, with a thermally-protective outer layer that, in turn, comprises at least one compound whose melting temperature is higher than the melting temperature of the inner sheet of compostable plastic material.

The packaging of compostable material according to the invention is also characterised in that the mesh of compostable material comprises at least modified starch.

Alternatively, the mesh of compostable material comprises at least polylactic acid or one or more of its derivatives.

The packaging of compostable material according to the invention is also characterised in that the mesh of compostable material comprises compostable polyesters.

The packaging of compostable material according to the invention is characterised in that the mesh that it comprises consists of an extruded mesh.

Alternatively, the packaging of compostable material comprises a mesh consisting of a woven mesh.

According to another characteristic of the invention, the packaging of compostable material comprises a mesh of compostable material that is a flat mesh.

The packaging of compostable material according to the invention is also characterised in that the mesh of compostable material consists of a flexible tubular mesh body.

Another object of the present invention is packaging in the form of a bag that comprises a flexible tubular mesh body of a heat-sealable compostable material and at least two outer strips of heat-sealable compostable plastic material, said strips being positioned at least over each of the ends of the tubular body and attached at least by heat-sealing areas of the materials of the tubular mesh body and the outer strips of compostable plastic material, forming the means of closure of the ends of the tubular mesh body. The packaging in the form of a bag is characterised in that the outer strips of compostable plastic material consist of at least two strips as described above, which comprise an inner sheet of compostable plastic material with a melting temperature that is appreciably the same as the melting temperature of the mesh or section of mesh to which they must be sealed; and which are provided, at least in the material heat-sealing areas, with a thermally-protective outer layer that, in turn, comprises at least one compound whose melting temperature is higher than the melting temperature of the inner sheet of compostable plastic material.

The packaging in the form of a bag according to the invention is preferably characterised in that the compostable material of the tubular mesh body comprises at least modified starch.

Alternatively, the compostable material of the tubular mesh body comprises at least polylactic acid or one of its derivatives.

The packaging in the form of a bag according to the invention is also characterised in that the compostable material of the flexible tubular mesh body comprises at least compostable polyesters.

The packaging in the form of a bag according to the invention is characterised in that at least one of the outer strips of heat-sealable compostable plastic material is positioned along the tubular body and attached at least at the ends of said tubular body by the material heat-sealing areas.

The packaging in the form of a bag according to the invention is also characterised in that it comprises outer strips that are positioned opposite each other along the tubular body and attached at each end of the tubular mesh body.

Also preferable is packaging in the form of a bag characterised in that it comprises four outer strips of compostable plastic material positioned opposite each other in pairs and attached to each end of the tubular mesh body by the material heat-sealing areas (2).

The packaging in the form of a bag according to the invention is characterised in that the mesh consists of an extruded mesh.

Alternatively, the packaging in the form of a bag comprises a flexible tubular mesh body that consists of a woven mesh.

### Brief description of the drawings

The attached drawings show a non-limiting example of a preferred embodiment of the strip of plastic material that is the object of the invention, in addition to an example of the packaging and bag that it comprises. In said drawings:
Fig. 1 is a schematic perspective view of an embodiment of the strip that is the object of the invention;
Fig. 2 is another schematic perspective view of another embodiment of the strip that is the object of the invention;
Fig. 3 is a plan view of a sheet that constitutes the packaging of compostable material according to the invention;
Fig. 4 is a side elevation view of packaging in the form of a bag according to the invention;
Fig. 5 corresponds to a perspective view of another embodiment of packaging in the form of a bag according to the invention; and
Fig. 6 shows another embodiment of packaging in the form of a bag that is the object of the invention.

### Detailed description of the drawings

The strip 1 of compostable plastic material, of the type that is designed to be heat-sealed to a mesh 3 or section of mesh, by several material heat-sealing areas 2, which is the object of the invention, provides solutions to the problems existing in the field of manufacturing packaging 7 of compostable material, of the type used to package food products 8, said problems deriving from the lack of materials or a suitable combination of materials that make it possible to heat-seal them without the material breaking and without soiling the equipment used for this purpose.

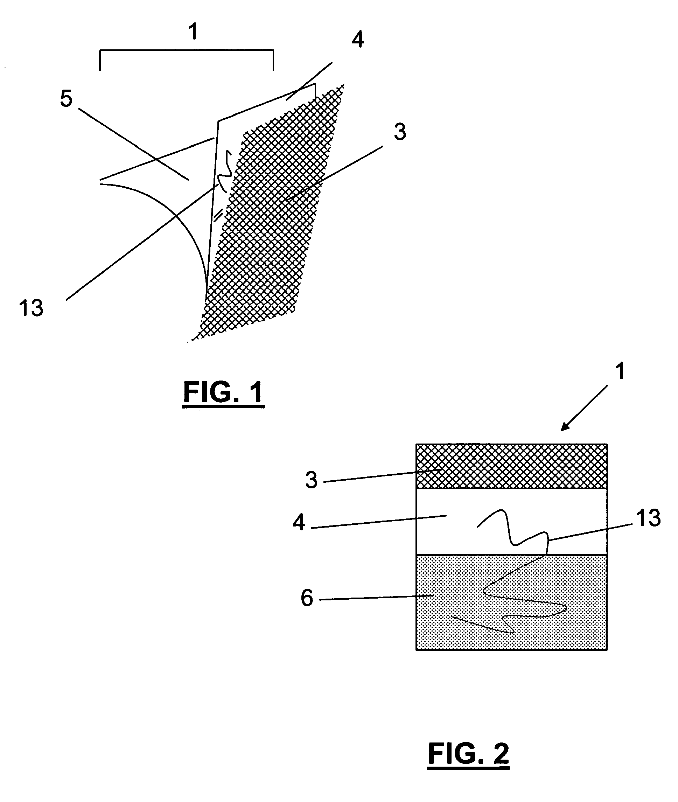

Thus, Fig. 1 shows an embodiment of the strip 1 of compostable plastic material that is the object of the invention, which can be applied by heat-sealing to a mesh 3, according to which said strip 1 comprises an inner sheet 4 of compostable plastic material and a thermally-protective outer layer that consists of an outer sheet 5 of compostable material, superimposed on the whole of said inner sheet 4.

The melting temperature of the inner sheet 4 is appreciably the same as the melting temperature of the mesh 3. The melting temperature of the inner sheet 4 of the strip 1 is actually slightly higher than that of the mesh 3 to which it must be joined by heat-sealing areas or points 2. Therefore, the inner sheets 4 used have melting temperatures with a maximum difference of 20°C in relation to the melting temperature of said mesh 3.

In contrast, the melting temperature of the thermally-protective outer layer (5,6), which in Fig. 1 corresponds to an outer sheet 5, comprises at least one compound whose melting temperature is higher than the melting temperature of the inner sheet 4 of compostable plastic, the difference in melting temperatures between said outer sheet 5 and the inner sheet 4 being at least 30°C.

With a combination of inner sheets 4 and thermally-protective outer layer (5, 6) when the strip 1 must be joined to the mesh 3, said mesh 3 and the inner sheet 4 are melted, e.g. by applying heat using heat-sealing equipment, the strip 1 and mesh 3 assembly being solidly joined. The thermally-protective outer layer (5, 6) acts as a thermal barrier, allowing heat to pass so that the mesh 3 and the inner sheet 4 can be joined; but preventing excess heat from being applied, which would cause the degradation of said inner sheet 4 and mesh 3, with its consequent breakage; and, at the same time, preventing the outside of the strip 1 itself from degrading with the consequent pronounced anti-aesthetic effect.

Likewise, and according to Fig. 2, the thermally-protective outer layer can consist of a coating 6, in the form of a coating, film or bath, which is evenly applied to at least the material heat-sealing areas 2, i.e. said outer layer (5,6) does not necessarily have to consist of a sheet that can be separated from the inner sheet 4 that comprises the strip 1.

In order to make the strip 1 compostable, the inner sheet 4 of compostable plastic material can contain at least one compound such as modified starch, polylactones, polyesters, aliphatic polyesters, copolyesters, aliphatic copolyesters, polylactic acid or one or more of its esterified derivatives and polycaprolactones.

As a general rule, when polylactic acid or its derivatives are used, polylactic acid mixtures are used with a percentage of 40% of said polymer and the rest in copolyesters, e.g. the mixture known by the trade name Bioflex®.

Other examples of compostable compounds that the inner sheet 4 can comprise are polyhydroxybutyrate valerate copolymer (PHBV), poly(butylene succinate) (PBS), polybutylene adipate-co-terephthalate (PBAT), etc.

The same compounds used for the inner sheet 4 can be used when the thermally-protective outer layer is an outer sheet 5 of compostable material, positioned at least in the material heat-sealing areas 2. However, the compostable compounds that are used must have a melting temperature that is higher than that of the compounds used for the inner sheet 4.

Preferably, in addition to other components, said outer sheet 5 of compostable material should comprise cellulose or a derivative thereof, such as ethylcellulose, cellulose modified by substitution of the hydroxyl groups with radicals selected as required, such as carboxyl groups, alkyls, acetates, etc. For this, the cellulose or one of its derivatives preferably takes the form of wood pulp or cellulose pulp.

In the case shown in Fig. 2, i.e. when the strip 1 comprises an inner sheet 4 and a coating 6, in the form of a varnish, bath or film, the use of epoxy compounds, lacquers, polyesters or acrylic compounds is anticipated. In this specific case, if the entire strip 1 is to be compostable, the percentage by weight of said coating 6 is less than 1 % in relation to the total of the strip 1.

When lacquers are used, they may comprise colourings.

In any case, if the entire strip 1 is compostable, in accordance with the different international or national standards on compostability, a suitable material is chosen for both the inner sheet 4 and the thermally-protective outer layer (5, 6) in a proportion by weight that makes it possible to comply with these different standards. Likewise, the thickness of the inner 4 and outer 5 sheets or the coating 6 is also controlled.

This type of strips 1 must be able to carry printed information 13 regarding trade names, product indications, characteristics thereof, etc.

This printed information 3 is applied by printing (inkjet or laser printers, etc.) on either of the two sides of the inner sheet 4 of compostable plastic material. The thermally-protective outer layer (5, 6) ensures that the printed information 13 is not deformed or degraded when heat is applied to the sealing areas 2, because as has been mentioned above, the outer layer (5, 6) allows the necessary heat to pass in order to melt the compostable materials of the inner sheet 4 and the mesh 3 to which the strip 1 is applied, without excessive heat causing the deterioration or breakage of the mesh 3 and the inner sheet 4.

Likewise, the printed information 13 can be applied to at least one of the two sides of the outer sheet 5 of compostable material, which at the same time acts as a thermally-protective layer.

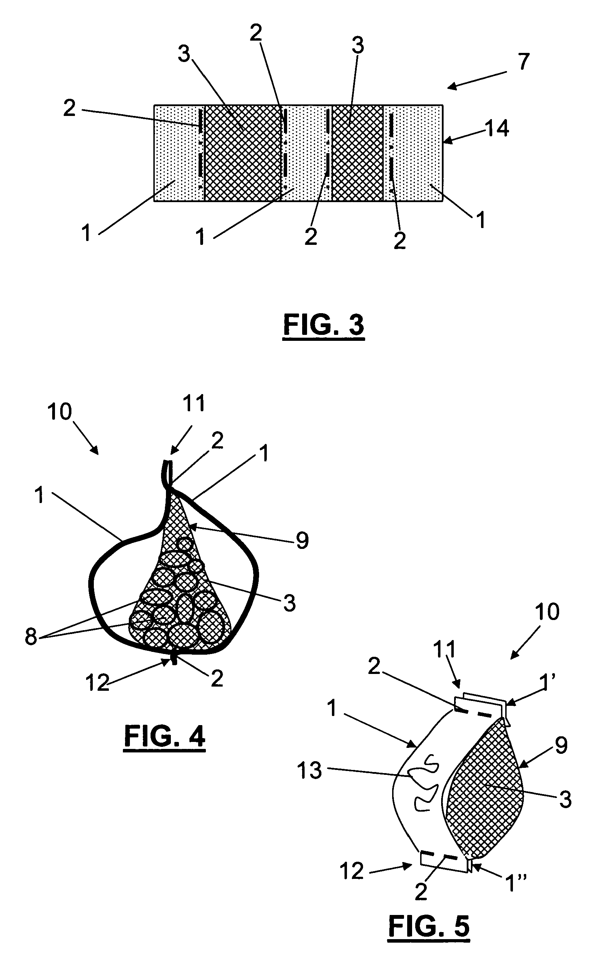

The strips 1 of plastic material that are the object of the invention are applied to meshes 3 or sections of mesh to form packaging 7 of compostable material. Figs 3 to 6 therefore show various packages 7 and packaging in the form of a bag 10, of the type that comprises a mesh 3 of compostable material that is adapted to come into contact with food products 8; and at least one plastic strip 1.

This type of packages 7 and packaging in the form of a bag 10 is produced by applying heat using heat-sealing equipment (not shown), in devices that continuously receive the strip 1 from a reel and the mesh 3 from another continuous mesh 3 feeder and that join them at least by the heat-sealing areas or points 2. However, any other method of sealing 2 in which, by definition, the materials of two different bodies are melted, can be applied to the strip 1 and packaging (7, 10) that are the object of the invention. Thus, the strip 1 can be applied to meshes 3 by heat-sealing areas 2 by applying ultrasound, the formation of the continuous strip 1 being, in this case, effective in overcoming the problems of the state of the art.

Specifically, Fig. 3 shows a sheet 14 made up of two sections of mesh 3 of compostable material and three strips 1 according to the invention, which are solidly joined to the mesh 3 by material heat-sealing points 2. With this type of sheets 14 it is possible to form packaging that is adapted to contain food products 8, folding the sheet 14 over, so that the strips 1 at the ends are at least partially superimposed on the intermediate strip 1; and applying any means of melting the compostable plastic materials that constitute the inner sheets 4 of the strips 1 and the mesh 3 to define an upper and lower means of closure of the packaging.
Another example of packaging that is the object of the invention is that which appears in Figs 4, 5 and 6 and which corresponds to packaging in the form of a bag 10.

The embodiment shown in Fig. 4 corresponds to a preferred embodiment according to which a bag 10 comprises a flexible tubular mesh body 9, of heat-sealable compostable material and two outer strips 1, also of heat-sealable compostable plastic material, which are positioned opposite each other along the tubular body 9 at the upper 11 and lower 12 ends. The outer strips 1 are attached by at least heat-sealing areas 2 to said upper 11 and lower 12 ends, forming the means of closure of the tubular mesh body 9.

Another preferred embodiment of packaging in the form of a bag 10 according to the invention is shown in Fig. 5. In this case, the bag 10 consists of the flexible tubular mesh body 9 and a strip 1, which is positioned along said tubular body 9 on one of its sides and outer strips (1', 1") positioned at the upper 11 and lower 12 ends of the tubular body, all the strips (1, 1' and 1") being adapted so that they can also be heat-sealed to the mesh 3 by the sealing areas 2.

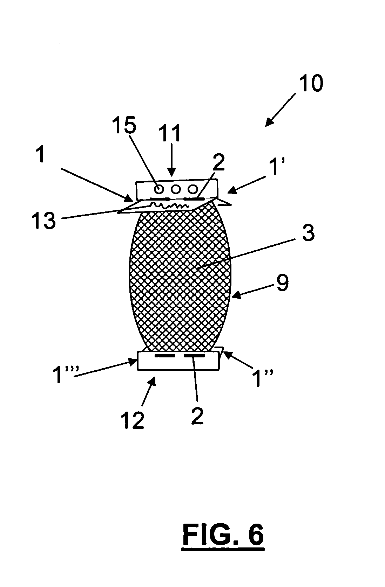

Yet more preferable is packaging in the form of a bag 10 as shown in Fig. 6. In this case, the flexible tubular mesh body 9 is closed by its upper 11 and lower 12 ends by applying four strips (1, 1', 1" and 1"'), positioned opposite each other in pairs at the upper 11 and lower 12 ends and that can also be heat-sealed to the mesh 3 by sealing areas 2. It also includes holes 15 to facilitate the transport of the packaging in the form of a bag 10, for insertion of the fingers into said holes 15. The inclusion of any other type of handle (not shown) is also anticipated.

Combinations of materials used to form packaging in the form of a bag 10 of the type shown in Figs 4 to 6 are given below as a non-limiting example.

### Example 1: Packaging in the form of a bag 10 of compostable plastic material.

**Table 1**

| **Bag element 10** | **Composition** |
|---|---|
| Flexible tubular mesh body | Modified starch with a melting temperature of 80°C |
| Inner sheet 4 of the strip 1 | Modified starch with a melting temperature of 85°C |
| Thermally-protective outer layer in the form of an outer sheet 5 | Sheet of wood pulp with a melting temperature of 150°C |

### Example 2: Packaging in the form of a bag 10 of compostable plastic material with a strip 1 of compostable plastic material with a coating comprising epoxy resins.

**Table 2**

| **Bag element 10** | **Composition** |
|---|---|
| Flexible tubular mesh body | Modified starch (70% by weight) and polyhydroxybutyrate valerate copolymer (30% by weight), the mixture having a melting temperature of 85°C |
| Inner sheet 4 of the strip 1 | Modified starch with a melting temperature of 90°C |
| Thermally-protective outer layer in the form of an even coating 6 | Epoxy resin produced by the reaction between epichlorohydrin and bisphenol-a, with a melting temperature of 155°C. |

This technical solution of applying outer strips 1 of material plastic to meshes 3 or sections of mesh, said strips 1 comprising an inner sheet 4 of compostable plastic material that are provided with a thermally-protective outer layer in the form of an outer sheet 5 or an even coating 6, at least in the heat-sealing areas 2 with the mesh 3, is applicable to meshes 3 or sections of mesh that are woven or produced by extrusion of the compostable plastic materials of which they are made.

Furthermore, with the strip 1 of compostable plastic material that is the object of the invention it is not necessary to modify or adapt the equipment usually used to manufacture packaging 7 of compostable material, particularly packaging in the form of a bag 10 that is also made of compostable material, it being possible to add printed information 13 to the strip 1 or strips that will be heat-sealed to the mesh 3 without said printed information 13 deteriorating when all the materials are heat-sealed together to form the means of closure (at the upper 11 and lower 12 ends) of the bag 10.

With the strip 1 of plastic material that is the object of the invention, it is possible to produce packaging 7, e.g. in the form of a single flat sheet or wound onto a reel and packaging in the form of a bag 10 according to Figs. 4 to 6 that is fully compostable, i.e. that can be subjected to a process to produce compost by aerobic decomposition or anaerobic digestion of biodegradable organic matter. This will be the case provided that the amount of materials used for each component of the packages 7 and packaging in the form of a bag 10 complies with the applicable legislation at a given time in each of the regions or countries where said packaging (7, 10) is to be manufactured or distributed. Thus, even if strips 1 are used with coatings 6 that comprise non-compostable plastic compounds, e.g. pigmented lacquers, polyethylene or polystyrene, if the amount included in said even coating 6 is within the permitted limits in accordance with said legislation, the package 7 or packaging in the form of a bag 10 as a whole can be declared compostable in accordance with said applicable standards or legislation.

## Claims

1. Strip (1) of compostable plastic material of the type that comprise sealing areas (2) that are designed to be heat-sealed to a mesh (3) or section of mesh, **characterised in that** it comprises an inner sheet (4) of compostable plastic material with a melting temperature that is appreciably the same as the melting temperature of the mesh or section of mesh; and **in that** it is provided, at least in the material heat-sealing areas, with a thermally-protective outer layer (5,6) that, in turn, comprises at least one compound whose melting temperature is higher than the melting temperature of the inner sheet of compostable plastic material.

2. Strip (1) of compostable plastic material according to claim 1, **characterised in that** the inner sheet (4) de material plastic compostable comprises at least one compound selected from the group consisting of polyesters, aliphatic polyesters, copolyesters, aliphatic copolyesters, polylactic acid or one or more of its derivatives and polycaprolactones.

3. Strip (1) of compostable plastic material according to any one of claims 1 or 2, **characterised in that** the thermally-protective outer layer consists of an outer sheet (5) of compostable material, which is superimposed on the inner sheet (4) of compostable plastic material, at least in the material heat-sealing areas (2).

4. Strip (1) of plastic material according to claim 3, **characterised in that** the outer sheet (5) of compostable material comprises at least one compound selected from the group consisting of cellulose or one of its derivatives, modified starch, polylactones, polyesters, aliphatic polyesters, copolyesters, aliphatic copolyesters, polylactic acid or one or more of its derivatives and polycaprolactones, all of which have a melting temperature that is higher than the melting temperature of the inner sheet (4) of compostable plastic material.

5. Strip (1) of compostable thermoplastic material according to claim 4, **characterised in that** the cellulose or one of its derivatives takes the form of wood pulp.

6. Strip (1) of compostable plastic material according to any one of claims 1 or 2, **characterised in that** the thermally-protective outer layer consists of a coating (6) that is evenly distributed over the inner sheet (4), at least in the material heat-sealing areas (2).

7. Strip (1) of plastic material according to claim 6, **characterised in that** the coating (6) comprises at least one epoxy-type compound, lacquers, polyesters or acrylic compounds.

8. Packaging (7) of compostable material that is adapted to cover food products (8) and in particular fruit and vegetable products, which comprises a mesh (3) of compostable material that is adapted to come into contact with the food products; and at least one plastic strip (1) that is attached at least in some heat-sealing areas (2) to said mesh, **characterised in that** it comprises a compostable plastic strip according to any one of claims 1 to 7.

9. Packaging (7) of compostable material according to claim 8, **characterised in that** the compostable material of the mesh (3) comprises modified starch.

10. Packaging (7) of material compostable according to claim 8, **characterised in that** the mesh (3) of compostable material comprises polylactic acid or one or more of its derivatives.

11. Packaging (7) of compostable material according to claim 8, **characterised in that** the mesh (3) of compostable material comprises compostable polyesters.

12. Packaging (7) of compostable material according to any one of claims 8 to 11, **characterised in that** the mesh (3) consists of an extruded mesh.

13. Packaging (7) of compostable material according to any one of claims 8 to 11, **characterised in that** the mesh (3) is a woven mesh.

14. Packaging (7) of compostable material according to any one of claims 8 to 13, **characterised in that** the mesh (3) of compostable material is a flat mesh.

15. Packaging (7) of compostable material according to any one of claims 8 to 13, **characterised in that** the mesh (3) of compostable material takes the form of a flexible tubular mesh body (9).

16. Packaging in the form of a bag (10) that comprises a flexible tubular mesh body (9) of heat-sealable compostable material and at least two outer strips (1, 1') of heat-sealable compostable plastic material, said strips being positioned at least over each end (11, 12) of the tubular body and attached at least by some heat-sealing areas (2) of the materials of the tubular mesh body and the outer strips of compostable plastic material, forming the means of closure of the ends of the tubular mesh body, **characterised in that** the outer strips of compostable plastic material consist of at least two strips according to any one of the previous claims 1 to 7.

17. Packaging in the form of a bag (10) according to claim 16, **characterised in that** the compostable material of the flexible tubular mesh body (9) comprises at least modified starch.

18. Packaging in the form of a bag (10) according to claim 16, **characterised in that** the compostable material of the flexible tubular mesh body (9) comprises at least polylactic acid or one or more of its derivatives.

19. Packaging in the form of a bag (10) according to claim 16, **characterised in that** the compostable material of the flexible tubular mesh body (9) comprises at least compostable polyesters.

20. Packaging in the form of a bag (10) according to any one of claims 16 to 19, **characterised in that** it comprises at least one of the outer strips (1) of weldable compostable plastic material that is positioned along the tubular body (9) and attached at least at the ends (11, 12) of said tubular body by the material heat-sealing areas (2).

21. Packaging in the form of a bag (10) according to any one of claims 16 to 20, **characterised in that** it comprises both outer strips (1, 1') that are positioned opposite each other along the tubular body (9) at each of the ends (11, 12) of the tubular mesh body.

22. Packaging in the form of a bag (10) according to any one of claims 16 to 19, **characterised in that** it comprises four outer strips (1, 1', 1", 1"") of compostable plastic material positioned opposite each other in pairs at each of the ends (11, 12) of the tubular mesh body and attached at least at the ends (11, 12) of said tubular body by the material heat-sealing areas (2).

23. Packaging in the form of a bag (10) according to any one of claims 16 to 22, **characterised in that** the mesh (3) is an extruded mesh.

24. Packaging in the form of a bag (10) according to any one of claims 16 to 22, **characterised in that** the mesh (3) is a woven mesh.
